(19) **Europäisches Patentamt**
**European Patent Office**
**Office européen des brevets**

(11) **EP 1 520 263 B1**

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(21) Anmeldenummer: **03761524.2**

(22) Anmeldetag: **26.06.2003**

(51) Int Cl.:
*G08G 1/095* (2006.01)   *H05B 33/08* (2006.01)

(86) Internationale Anmeldenummer:
**PCT/EP2003/006774**

(87) Internationale Veröffentlichungsnummer:
**WO 2004/003869 (08.01.2004 Gazette 2004/02)**

(54) **LICHTABGABEEINRICHTUNG, INSBESONDERE VERKEHRSSIGNAL-LICHTABGABEEINRICHTUNG, DIE MIT LEUCHTDIODEN AUFGEBAUT IST**

LIGHT EMITTING DEVICE, IN PARTICULAR TRAFFIC SIGNAL LIGHT EMITTING DEVICE, WHICH IS COMPOSED OF LIGHT EMITTING DIODES

DISPOSITIF D'EMISSION LUMINEUSE, EN PARTICULIER DISPOSITIF D'EMISSION LUMINEUSE POUR FEUX DE SIGNALISATION, CONSTITUE DE DIODES ELECTROLUMINESCENTES

(84) Benannte Vertragsstaaten:
**AT BE BG CH CY CZ DE DK EE ES FI FR GB GR HU IE IT LI LU MC NL PT RO SE SI SK TR**

(30) Priorität: **27.06.2002 DE 10228820**
**05.08.2002 DE 10235811**

(43) Veröffentlichungstag der Anmeldung:
**06.04.2005 Patentblatt 2005/14**

(73) Patentinhaber: **Monzo, Jose**
**73732 Esslingen (DE)**

(72) Erfinder: **Monzo, Jose**
**73732 Esslingen (DE)**

(74) Vertreter: **Klunker . Schmitt-Nilson . Hirsch**
**Winzererstrasse 106**
**80797 München (DE)**

(56) Entgegenhaltungen:
**WO-A-01/01385**          **WO-A-99/39319**
**FR-A- 2 586 844**        **US-A- 4 298 869**
**US-A- 5 463 280**

**Beschreibung**

Gegenstand der Erfindung ist eine Lichtabgabeeinrichtung, insbesondere Verkehrssignal-Lichtabgabeeinrichtung, die mit Leuchtdioden (= LEDs) aufgebaut ist,
aufweisend folgende Merkmale:

(a) die Lichtabgabeeinrichtung weist mindestens einen Strang auf, in dem eine Vielzahl von LEDs in Serie geschaltet ist;
(b) der LED-Strang ist ohne Spannungkonversion und ohne Pulsmodulation im Wesentlichen an eine Netzspannung von mindestens 110 V anschließbar;
(c) der LED-Strang ist über eine Strombegrenzungseinrichtung an die Netzspannung anschließbar; und
(d) eine Einrichtung zum Unterdrücken des Nachleuchtens der LEDs ist vorgesehen.

Eine Lichtabgabeeinrichtung dieser Art mit den Merkmalen (a), (b), (c) ist aus WO 01 01385 bekannt. Diese Lichtabgabeeinrichtung weist keine Einrichtung zum Unterdrücken des Nachleuten der LEDs gemäß Merkmal (d) auf.
Bei der erfindungsgemäßen Lichtabgabeeinrichtung ist die Stromversorgung hinsichtlich Herstellungskosten, Zuverlässigkeit und Platzbedarf optimiert.
Vorzugsweise sind der LED-Strang und die strombegrenzende Schaltung über eine gleichrichtende Schaltung an die Netzspannung angeschlossen. Die gleichrichtende Schaltung kann insbesondere mit einer Diode oder mit einer Brückenschaltung aus Dioden realisiert sein.
Vorzugsweise ist mindestens eine Kapazität in Parallelschaltung zu der gleichgerichteten Netzspannung und zu dem LED-Strang mit Strombegrenzungseinrichtung angeordnet. Dadurch wird erreicht, dass die LEDs näherungsweise mit Gleichstrom betrieben werden. Im Gleichstrombetrieb kann der vom Hersteller spezifizierte Nennstrom eingehalten werden. Die Speicherfunktion der parallel geschalteten Kapazität kann auch durch eine in Serie geschaltete Induktivität erreicht werden.
Ein Nachleuchten der LEDs kann aufgrund der in der zuvor genannten Kapazität gespeicherten Ladung entstehen, wenn diese nach Abschalten der Netzspannung über die LEDs abfließt. Ein Nachleuchten ist insbesondere bei blinkenden Lichtabgabeeinrichtungen störend. Eine Nachleuchtunterdrückung stellt sicher, dass nach Abschalten der Netzspannung die in der genannten Kapazität gespeicherte Ladung nicht über die LEDs abfließt. Dadurch ist sichergestellt, dass nach Abschalten der Netzspannung von der Lichtabgabeeinrichtung kein Licht mehr abgegeben wird.
Vorzugsweise weist die Nachleuchtunterdrückung zwischen der gleichrichtenden Schaltung und der zuvor genannten Kapazität eine in Flußrichtung gepolte Diode auf. Der LED-Strang ist an der Anode dieser Diode angeschlossen. In Serie zu dem LED-Strang befindet sich ein elektronischer Schalter mit mindestens einem Steuereingang, wobei mindestens ein Steuereingang des elektronischen Schalters an die Netzspannung angeschlossen ist. Die Diode stellt sicher, dass nach Abschalten der Netzspannung kein Strom an den Steuereingang des elektronischen Schalters fließen kann und dass der genannte Steuereingang des elektronischen Schalters vom Potential dieser Kapazität getrennt ist. Somit unterbricht der elektronische Schalter den Stromfluß durch den LED-Strang.
Vorzugsweise weist der elektronische Schalter einen Transistor auf, dessen Kollektor über den LED-Strang an das Potential der Anode der zuvor genannten Diode angeschlossen ist, dessen Emitter an dem dazu entgegengesetzten Netzspannungspotential angeschlossen ist, und dessen Basis an das Potential der Netzspannung angeschlossen ist. Da nach Abschalten der Netzspannung an der Basis des Transistors kein Potential mehr anliegt, sperrt dieser den Stromfluß durch die LEDs.
Vorzugsweise ist in der Lichtabgabeeinrichtung mindestens ein Bauelement vorgesehen, das Funktion sowohl in der Strombegrenzungseinrichtung als auch in der Nachleuchtunterdrückung hat. Ein weiter unten beschriebenes Ausführungsbeispiel wird dies noch weiter verdeutlichen. Dadurch kann die Lichtabgabeeinrichtung kostengünstiger, platzsparender und zuverlässiger aufgebaut werden.
Vorzugsweise ist zu der Kapazität mindestens ein Widerstand in Parallelschaltung angeordnet. Der Widerstand entlädt die Kapazität bei Abschalten der Netzspannung, wodurch ein Nachleuchten der LEDs verhindert wird. Vorzugsweise ist zwischen der Kapazität und dem Eingang der Strombegrenzungseinrichtung mindestens eine Diode geschaltet. Die Diode stellt sicher, dass nach Abschalten der Netzspannung kein Strom an die Ansteuerung der Strombegrenzungseinrichtung fließen kann und dass die Ansteuerung der Strombegrenzungseinrichtung vom Potential der Kapazität getrennt ist. Auch dies verhindert das Nachleuchten der LEDs.
Vorzugsweise ist den LEDs des LED-Strangs mindestens eine Kapazität parallel geschaltet, wobei jede Kapazität mindestens einer LED parallel geschaltet ist. Dadurch kann verhindert werden, dass eventuelle Spannungsspitzen die LEDs beschädigen. Es sind Ausführungsformen möglich, bei denen jeder LED eine Kapazität parallel geschaltet ist, oder auch Ausführungsformen, bei denen Gruppen von LEDs oder sogar allen LEDs eine Kapazität parallel geschaltet ist.
Da LEDs eine Vorwärtsspannung im Bereich von wenigen Volt haben, war es - bei gewünschtem Anschluß an eine Netzspannung - bisher üblich, eine Spannungskonversion, typischerweise mit einem Transformator, vorzusehen.

Verglichen mit den meisten Schaltungs-Bauelementen sind Transformatoren voluminös und schwer. Außerdem war es bisher üblich, die Stromversorgungsschaltung einer LED-Anordnung örtlich separiert von der LED-Anordnung vorzusehen. Schließlich hat man bisher üblicherweise die Leiterplatte, welche eine Mehrzahl von LEDs trägt, z.B. durch Schrauben an derjenigen Vorrichtung angebracht, in welcher die Lichtabgabeeinrichtung ihren Dienst versehen soll.

Vorzugsweise weist die Lichtabgabeeinrichtung folgende Merkmale auf:

(a) einen Tragkörper, der einen Anbringungsbereich zum Haltern der Lichtabgabeeinrichtung in einem Sockel unter Stromzuführung und einen Lichtabgabebereich mit LEDs aufweist;

(b) und eine Leiterplatte oder eine sandwichartige Leiterplattenanordnung, wobei die LEDs und die Bauelemente einer Schaltung, die ohne Spannungskonversion den Anschluß der Lichtabgabeeinrichtung an eine Netzspannung von mindestens 110 V erlaubt, an der Leiterplatte oder der sandwichartigen Leiterplattenanordnung angebracht sind.

Diese Lichtabgabeeinrichtung zeichnet sich dadurch aus, dass sie besonders rationell und kostengünstig herstellbar ist und besonders problemlos in die Vorrichtung eingesetzt werden kann, in welcher sie ihren Dienst versehen soll. Die Stromversorgung ohne Spannungskonversion führt zu einem leichten, kleinen Aufbau mit besonders geringem Ausfallrisiko.

Wenn, wie bevorzugt, der Anbringungsbereich des Tragkörpers in eine gängige Schraubfassung oder eine gängige Steckfassung oder eine gängige Bajonettfassung, wie sie insbesondere für Glühlampen gängig sind, paßt, gestaltet sich das Einsetzen der Lichtabgabeeinrichtung in die Vorrichtung, in welcher sie ihren Dienst versehen soll, besonders einfach. Außerdem hat man eine perfekte "Umrüstlösung" vor sich, d.h. die Möglichkeit des problemlosen Austauschs einer bisher eingesetzten Glühlampe gegen eine erfindungsgemäße Lichtabgabeeinrichtung.

Mit "Netzspannung" ist vorzugsweise eine jeweilige Haushalts-Netzspannung gemeint. In vielen Ländern beträgt die Haushalts-Netzspannung 230 V oder 110 V. Die erfindungsgemäße Lichtabgabeeinrichtung kann jedoch auch für eine Netzspannung ausgelegt werden, die höher als übliche Haushalts-Netzspannungen ist, wenn z.B. Verkehrssignalanlagen mit einer höheren Netzspannung betrieben werden.

Der Begriff "Verkehrssignal-Lichtabgabeeinrichtung" soll sämtliche Lichtabgabeeinrichtungen umfassen, durch die im Verkehr Information gegeben wird. Konkret seien zuerst Lichtabgabeeinrichtungen in Straßenverkehrsampeln genannt, wobei im weiteren Sinne insbesondere auch auf Lichtsignal-Verkehrszeichen, leuchtende Wegweiser, leuchtende Symbole wie Pfeilsymbole und vieles Ähnliche mehr hingewiesen wird. Erfindungsgemäße Verkehrssignal-Lichtabgabeeinrichtungen können insbesondere beim Straßenverkehr, beim Schienenverkehr (z.B. Signale an Schienenstrecken), Schiffsverkehr und Luftfahrtverkehr (z.B. auf Flughäfen) eingesetzt werden. Ganz besonders hingewiesen wird auf die Möglichkeit des Einsatzes als Landebahnbefeuerung auf Flughäfen, wo es sich einerseits um eine Verkehrssignal-Lichtabgabeeinrichtung im weitesten Sinne handelt (Information an den Flugzeugführer über die Begrenzungen der Landebahn), andererseits aber auch um eine Beleuchtung. Hinausgehend über den angesprochenen Bereich der Verkehrssignale ist die erfindungsgemäße Lichtabgabeeinrichtung insbesondere einsetzbar im gesamten Gebiet der Verkehrstechnik. Hierüber hinausgehend ist die erfindungsgemäße Lichtabgabeeinrichtung einsetzbar auf dem gesamten Gebiet der Beleuchtung. Besonders seien genannt die Straßenbeleuchtung, die Garagenbeleuchtung, die Gebäudebeleuchtung, die Bürobeleuchtung, die Wohnungsbeleuchtung.

In Relation zu Lichtabgabeeinrichtungen, die auf dem Funktionsprinzip einer Glühlampe beruhen, zeichnen sich LED-Lichtabgabeeinrichtungen durch sehr viel höhere Lebensdauer und durch sehr viel geringeren Stromverbrauch aus. Gerade bei Verkehrssignal-Lichtabgabeeinrichtungen führt die sehr viel höhere Lebensdauer dazu, dass erhebliche Kosten für die Wartung und das häufige Auswechseln von Glühlampen eingespart werden.

Vorzugsweise sind die LEDs in ihrem Abstand von dem Anbringungsbereich des Tragkörpers so positioniert, dass ihre Lichtabgabe weitgehend dem von einem Reflektor reflektierten Licht einer Glühlampe einer gängigen Verkehrsampel äquivalent ist.

Eine übliche Verkehrsampel enthält übereinander eine Quelle für grünes Signallicht, eine Quelle für gelbes Signallicht und eine Quelle für rotes Signallicht. Üblicherweise ist bei jeder dieser Quellen eine weiße Glühlampe vorgesehen, die mit einem Reflektor zusammenwirkt. Das durch den Reflektor nach vorn abgestrahlte Licht tritt durch eine farbige (grün oder gelb oder rot) Abschlußscheibe nach außen aus. Die erfindungsgemäße Verkehrssignal-Lichtabgabeeinrichtung kann so ausgebildet sein, dass ihr LED-Feld eine Lichtabgabe äquivalent der bisherigen Ausführungsform mit Glühlampe und Reflektor ergibt. Erfindungsgemäß ist festgestellt worden, dass die optimale Positionierung hinsichtlich des Abstands von dem Anbringungsbereich des Tragkörpers (was zugleich auch optimale Positionierung hinsichtlich des Abstands von der Abschlußscheibe bedeutet) wichtig ist. Wenn das LED-Feld zu weit von der Abschlußscheibe entfernt ist, wird weniger als die optimale Lichtstärke erreicht. Wenn das LED-Feld zu nah an der Abschlußscheibe positioniert ist, wird nicht die optimale Homogenität der Lichtabgabe für das Verkehrssignal erreicht.

Vorzugsweise besteht bei der erfindungsgemäßen Lichtabgabeeinrichtung der Tragkörper mit Ausnahme von Teilen des Anbringungsbereichs (insbesondere solchen, die der Stromführung dienen), aus Kunststoff. Ein Kunststoff-Tragkörper läßt sich in den unterschiedlichsten Formen problemlos und kostengünstig fertigen. Häufig wird der Tragkörper eine kegelstumpfartige Grundform haben, wobei sich der Anbringungsbereich an dem durchmesserkleineren Ende des Tragkörpers befindet und die Leiterplatte bzw. die sandwichartige Leiterplattenanordnung sich an dem durchmessergrößeren Ende des Tragkörpers befindet. Hierbei kommt es selbstverständlich nicht auf eine exakte Geometrie eines Kegelstumpfs an; der Tragkörper stellt vielmehr einen Übergang von einem Querschnittsflächen-kleineren Endbereich (= Anbringungsbereich) zu einem Querschnittsflächen-größeren Endbereich (= Lichtabgabebereich mit LEDs) bereit. In vielen Fällen und damit vorzugsweise hat der Tragkörper eine Konfiguration mit im wesentlichen kreisförmigem Querschnitt, wobei sich der Querschnitt beim Fortschreiten in Längsrichtung des Tragkörpers normalerweise ändert. Wenn die erfindungsgemäße Lichtabgabeeinrichtung für eine Verkehrsampel vorgesehen ist, hat die Leiterplatte oder die Leiterplattenanordnung vorzugsweise in Draufsicht einen Durchmesser, der im wesentlichen dem vorderen Enddurchmesser des Reflektors einer gängigen Verkehrsampel entspricht. Z.B. in Deutschland beträgt der vordere Enddurchmesser des Reflektors einer gängigen Verkehrsampel 200 mm oder, bei größeren Verkehrsampeln, 300 mm. Mit im wesentlichen derart großen Leiterplatten bzw. Leiterplattenanordnungen nutzt man die zur Verfügung stehende Lichtabgabefläche optimal aus und erreicht optimale Homogenität der Lichtabgabe.

Vorzugsweise ist der Tragkörper vor den LEDs mit einer lichtdurchlässigen Abschlußplatte versehen. Die Abschlußplatte kann zum schützenden Abschließen z.B. gegen Feuchtigkeit und Schmutz vorgesehen sein. Man kann die Abschlußplatte aber auch zur optischen Beeinflussung der Lichtabgabe der LEDs einsetzen, z.B. zum Fokussieren, zum Erzeugen im wesentlichen paralleler Lichtstrahlen oder als Streuscheibe.

Vorzugsweise weist der Tragkörper einen Anlagering zur Anlage gegen einen Widerlagerbereich einer Vorrichtung, in welche die Lichtabgabeeinrichtung eingesetzt werden soll, auf. Hierdurch erreicht man eine zusätzliche Lagestabilisierung der Lichtabgabeeinrichtung im gehalterten Zustand, so dass man zur Lagefixierung nicht ausschließlich auf das Haltern in dem Sockel angewiesen ist.

Vorzugsweise weist der Tragkörper einen längenverstellbaren Bereich auf, durch dessen Verstellung sich die Positionierung der LEDs relativ zu dem Anbringungsbereich des Tragkörpers einstellen läßt. Weiter vorn ist bereits darauf hingewiesen worden, dass es vorteilhaft sein kann, die LEDs an einer bestimmten Stelle bezogen auf die Längsrichtung der optischen Achse der Lichtabgabeeinrichtung zu positionieren (insbesondere so zu positionieren, dass die Lichtabgabe der LEDs weitgehend dem von einem Reflektor reflektierten Licht einer Glühlampe einer gängigen Verkehrsampel äquivalent ist). Damit man eine gewünschte günstige Positionierung der LEDs auf eine einfache Weise einstellen kann, ist der genannte längenverstellbare Bereich vorgesehen. Der längenverstellbare Bereich kann insbesondere durch einen teleskopartig ausgebildeten Bereich verwirklicht sein.

Die Vielzahl der in einem Strang in Serie geschalteten LEDs kann so hoch gewählt werden, dass sich die Summe der Durchlassspannungen dieser LEDs in der Nähe der Netzspannung oder eines abgegriffenen Teils der Netzspannung befindet; hierdurch läßt sich die Verlustleistung in anderen Schaltungsteilen verringern. Durch Betreiben der LEDs ohne Pulsmodulation, mit Gleichstrom, kann der vom Hersteller spezifizierte Nennstrom durch die LEDs eingehalten werden. Dadurch ist sichergestellt, dass die vom LED-Hersteller spezifizierte Mindest-Lebensdauer der LEDs nicht durch Pulsmodulation beeinträchtigt wird.

Die Zener-Spannung der betreffenden Zener-Diode kann so berechnet werden, dass sie höher ist, als die Durchlassspannung der LED, mit der die Zener-Diode antiparallel geschaltet ist. Im Fall einer Unterbrechung des Stromflusses durch die LED ist der Stromfluß zu den weiteren LEDs des LED-Strangs gewährleistet. Durch diese Beschaltung wird erreicht, dass z.B. im Fall einer defekten LED, einer defekten Leiterbahn oder einer defekten Lötstelle, die LEDs, die nicht von der Zener-Diode antiparallel geschaltet sind, weiterleuchten. Wenn eine Zener-Diode mit mehreren, ihrerseits in Serie geschalteten LEDs antiparallel geschaltet ist, kann man bei der obigen Berechnung die Summe der Durchlassspannungen der betreffenden LEDs ansetzen. Vorzugsweise werden mindestens zwei LEDs von einer Zener-Diode überbrückt, stärker bevorzugt mindestens drei LEDs, noch stärker bevorzugt mindestens 4 LEDs; ganz besonders bevorzugt ist es, wenn drei bis acht LEDs überbrückt sind.

Wenn vorstehend gesagt worden ist, dass der LED-Strang an eine Netzspannung von mindestens 110 V angeschlossen ist, soll dies naturgemäß nicht bedeuten, dass der LED-Strang direkt an die Netzspannung angeschlossen ist. In aller Regel sind zwischengeschaltete Schaltungsglieder vorhanden. Der LED-Strang und die Strombegrenzungseinrichtung können indirekt an die Netzspannung von mindestens 110 V angeschlossen sein. Die zwischengeschalteten Schaltungsglieder, z. B. ein Spannungsteiler, können bewirken, dass an dem LED-Strang und der Strombegrenzungseinrichtung nur eine Teil-Netzspannung anliegt. Die Möglichkeit des indirekt Angeschlossen-Seins gilt auch für die anderen Stellen der vorliegenden Anmeldung, wo von "angeschlossen ist" gesprochen wird.

Vorzugsweise weist die Strombegrenzungseinrichtung einen Widerstand auf. Man kann die Schaltung so ausbilden, dass an diesem Widerstand im Wesentlichen die Differenz aus der Netzspannung und der Spannung über den LED-Strang abfällt.

Vorzugsweise weist die Strombegrenzungseinrichtung eine Stromeinprägeeinrichtung auf. Dadurch wird eine weitgehende Unabhängigkeit des Stroms durch die LEDs, und damit der Intensität der LEDs, von Schwankungen der Netzspannung erreicht. Außerdem wird optimale Lebensdauer der LEDs sichergestellt.

Vorzugsweise weist die Stromeinprägeeinrichtung einen Widerstand und eine Diode auf, die in Serie an die Netzspannung angeschlossen,sind, wobei der Widerstand am gleichen Potential der Netzspannung wie der LED-Strang angeschlossen ist, wogegen die Diode an dem dazu entgegengesetzen Potential der Netzspannung angeschlossen ist. Weiterhin weist diese Stromeinprägeeinrichtung einen Transistor auf, an dessen Basis das Potential zwischen dem Widerstand und der Diode anliegt, dessen Kollektor über den LED-Strang an dem genannten gleichen Potential der Netzspannung angeschlossen ist, und dessen Emitter über einen weiteren Widerstand an das dazu entgegengesetzte Potential der Netzspannung angeschlossen ist. Die Diode kann beispielsweise durch eine in Sperrrichtung gepolter Zener-Diode, eine in Flußrichtung gepolte Diode oder eine in Flußrichtung gepolte LED ausgeführt sein. Dadurch wird eine von der Netzspannung unabhängige Referenzspannung erzeugt. Die Summe aus der Basis-Emitter-Spannung und der Spannung über den am Emitter angeschlossenen, weiteren Widerstand ist bei dieser Beschaltung identisch mit der Spannung über die Diode. Da die Spannung über den am Emitter angeschlossenen, weiteren Widerstand im Wesentlichen von dem Strom über den LED-Strang abhängt, stellt sich ein konstanter Strom durch den LED-Strang ein.

Der Strom über den LED-Strang kann über folgende Formel berechnet werden:

$$I_{LED} = (U_D - U_{BE}) / R_E;$$

dabei bedeuten:

$I_{LED}$:   Strom durch den LED-Strang;
$U_D$:   Strom über die Diode;
$U_{BE}$:   Spannung über die Basis-Emitter-Strecke des Transistors;
$R_E$:   Wert des am Emitter angeschlossenen, weiteren Widerstands.

Vorzugsweise sind die Anordnung der LEDs und die Stromversorgung der LEDs ab dem Netzeingang redundant. Selbst bei einem beliebigen Ausfall an irgendeiner Stelle der LEDs oder der Stromversorgung der LEDs ist immer noch eine Funktion der Lichtabgabeeinrichtung mit verringerter Lichtabstrahlung möglich. Aufgrund des sehr einfachen Aufbaus der erfindungsgemäßen Stromversorgung läßt sich der redundante Aufbau ohne wesentliche Mehrkosten und ohne wesentlichen zusätzlichen Platzbedarf realisieren. Es wird betont, dass es in bevorzugter Weiterbildung der Erfindung alternativ möglich ist, nur einen Teil von LED-Anordnung und Stromversorgung redundant auszuführen, also gleichsam mit der redundanten Ausführung ein Stück entfernt von dem Netzeingang zu beginnen.

Vorzugsweise sind die LEDs und die Stromversorgung der LEDs auf einer Leiterplatte oder einer sandwichartigen Leiterplattenanordnung angebracht. Es kommen auch flexible Leiterplatten in Betracht.

Vorzugsweise sind die LEDs der redundanten LED-Stränge so auf der Leiterplatte oder der sandwichartigen Leiterplattenanordnung angeordnet, dass bei Ausfall eines redundanten Teils eine im wesentlichen homogene Lichtabgabe erreicht wird. Insbesondere können die LEDs der redundanten Stränge im wesentlichen alternierend angeordnet werden.

Vorzugsweise sind die LEDs der redundanten LED-Stränge so auf der Leiterplatte oder der sandwichartigen Leiterplattenanordnung angeordnet, dass bei Ausfall eines redundanten Teils eine derart nicht-homogene Lichtabgabe entsteht, dass der Ausfall für einen Betrachter erkennbar ist. Zum Beispiel kann man eine erste Gruppe von LEDs auf einem ersten Teil der Lichtabgabefläche anordnen und eine redundante, zweite Gruppe von LEDs auf einem zweiten Teil der Lichtabgabefläche anordnen, z. B. zwei Halbkreise. Jede der zwei Gruppen kann weiter unterteilt sein, so dass man z. B. vier Kreissektoren oder vier Streifen innerhalb eines Quadrats erhält.

Weiter oben ist bereits angesprochen worden, dass die redundante Auslegung die Funktion der Lichtabgabeeinrichtung, wenn auch mit verringerter Lichtabgabe, bei irgendeinem elektrischen Ausfall sicherstellt. Dies ist gerade auch bei Verkehrssignal-Lichtabgabeeinrichtungen von besonders großer Bedeutung.

Bei entsprechender Ausführung, wie sie weiter oben als bevorzugte Ausführung angesprochen worden ist, läßt sich eine erfindungsgemäße Verkehrssignal-Lichtabgabeeinrichtung durch einfaches Austauschen anstelle einer Glühlampe einsetzen. Dabei ist die Ausführung vorzugsweise derart, dass der Reflektor einer gängigen Ampel in der Ampel verbleibt. Auch die vorhandene farbige Abschlußscheibe kann in der Ampel verbleiben.

Bei erfindungsgemäßen Verkehrssignal-Lichtabgabeeinrichtungen sieht man vorzugsweise farbige LEDs vor, z.B. rote LEDs für ein rotes Ampelsegment, grüne LEDs für ein grünes Ampelsegment und gelbe LEDs für ein gelbes Ampelsegment. Andererseits kann man bei der Erfindung mit weißen LEDs arbeiten, und zwar nicht nur bei Verkehrssignal-Lichtabgabeeinrichtungen, sondern ganz besonders bei Beleuchtungen.

Bei der Erfindung arbeitet man vorzugsweise ohne Impulsschaltung, um die LEDs an der Netzspannung zu betreiben.

Es wird betont, dass zahlreiche Merkmale der Erfindung auch bei einer Lichtabgabeeinrichtung verwirklicht werden können, die nicht für Anschluß an eine Netzspannung von mindestens 110 V ausgelegt ist, sondern z.B. für eine proprietäre Spannung unterhalb von 110 V, vorzugsweise im Bereich von 24 bis 110 V.

Die Erfindung und bevorzugte Ausführungen der Erfindung werden nachfolgend anhand von zeichnerisch dargestellten Ausführungsbeispielen noch näher erläutert. Es zeigt:

Fig. 1    eine Verkehrssignal-Lichtabgabeeinrichtung, in Seitenansicht und teilweise im Längsschnitt;
Fig. 2    einen Teil einer Verkehrssignal-Lichtabgabeeinrichtung alternativer Ausführung, im Längsschnitt;
Fig. 3    einen Teil einer Verkehrssignal-Lichtabgabeeinrichtung alternativer Ausführung, im teilweisen Längsschnitt;
Fig. 4    ein Schaltbild für die LEDs und die Strombegrenzungseinrichtung für die LEDs bei einer Lichtabgabeeinrichtung.
Fig. 5    ein Schaltbild für die LEDs und die Strombegrenzungseinrichtung für die LEDs bei einer Lichtabgabeeinrichtung, wobei die Strombegrenzungseinrichtung durch eine Stromeinprägeeinrichtung realisiert ist.

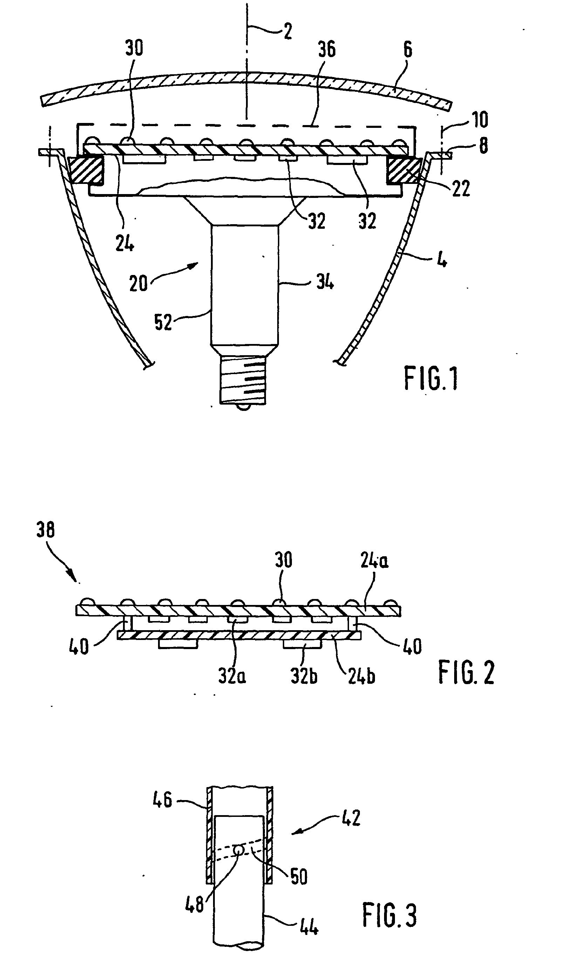

In Fig. 1 ist im Längsschnitt, der die optische Achse 2 enthält, ein Teil eines Ampelsegments (sei es grünes Ampelsegment, sei es gelbes Ampelsegment, sei es rotes Ampelsegment) dargestellt, und zwar ein vorderer Bereich eines Reflektors 4 und eine vordere, farbige Abschlußscheibe 6. Im weggeschnittenen, hinteren Bereich des Reflektors 4 trägt der Reflektor 4 eine Schraubfassung, in welche bei einem herkömmlichen Ampelsegment eine Glühlampe eingeschraubt ist. Der Reflektor 4 ist mit seinem vorderen Endbereich in einem Gehäuse des betreffenden Ampelsegments befestigt, wie Fig. 1 mit einem vorderen Endflansch 8 des Reflektors 4 und Achsen 10 von Befestigungsschrauben angedeutet.

Die sonst bei einem Ampelsegment, welches mit einer Glühlampe betrieben wird, vorhandene Glühlampe ist herausgeschraubt worden, und statt dessen ist eine gezeichnete Verkehrssignal-Lichtabgabeeinrichtung 20 in die gleiche Fassung eingeschraubt worden. In ihrem vorderen Endbereich (oben in Fig. 1) vergrößert sich die Lichtabgabeeinrichtung 20 bis nahezu auf den Innendurchmesser des Reflektors 4 in seinem vorderen Endbereich. Dort ist ein Gummiring 22, gehaltert in einer umlaufenden Nut der Lichtabgabeeinrichtung 20, an der Lichtabgabeeinrichtung 20 angebracht. Der Außendurchmesser des Rings 22 und seine axiale Positionierung (optische Achse 2 = Längsmittelachse der Lichtabgabeeinrichtung 20) sind so abgestimmt, dass bei vollständigem Einschrauben der Lichtabgabeeinrichtung 20 in die nicht gezeichnete Schraubfassung der Ring 22 mit einem hinteren Endbereich seines Außenumfangs in Anlage von innen her an den Reflektor 4 kommt, wodurch die Lichtabgabeeinrichtung zusätzlich stabilisiert wird. Über die nicht gezeichnete Schraubfassung wird die Lichtabgabeeinrichtung 20 wie eine Glühlampe an eine Netzspannung von z.B. 110 V oder 230 V angeschlossen.

In ihrem vorderen Endbereich (oben in Fig. 1) trägt die Lichtabgabeeinrichtung 20 eine Leiterplatte 24, die sich rechtwinklig zu der Achse 2 erstreckt. Die Leiterplatte 24 hat einen Außendurchmesser, der nur wenig kleiner ist als der größte Innendurchmesser des Reflektors 4. Auf der Vorderseite der Leiterplatte 24 ist eine Vielzahl von LEDs 30 angebracht. Auf der Rückseite der Leiterplatte 24 sind Schaltungsbausteine 32 angebracht. Ein Ausführungsbeispiel einer LED -Anordnung und einer Schaltung werden weiter unten noch beschrieben werden. An der jetzigen Stelle wird lediglich darauf hingewiesen, dass die Schaltung ohne Spannungskonversion und ohne Pulsmodulation den Betrieb der LEDs 30 an der Netzspannung ermöglicht.

Die gezeichnete und beschriebene Verkehrssignal-Lichtabgabeeinrichtung 20 setzt sich somit zusammen aus einem - grob gesprochen - pilzförmigen Tragkörper 34 und der angesprochenen Leiterplatte 24 mit den daran angebrachten LEDs 30 und Schaltungs-Bauelementen 32. Der Tragkörper 34 besteht vorzugsweise aus Kunststoff und ist vorzugsweise durch Spritzgießen hergestellt. Der hintere Endbereich des Tragkörpers 34 mit dem Schraubgewinde stellt einen Anbringungsbereich zum Haltern der Lichtabgabeeinrichtung 20 dar; der vordere Endbereich des Tragkörpers 34, wo die Leiterplatte 24 gehaltert ist, stellt einen Lichtabgabebereich der Lichtabgabeeinrichtung 20 dar.

Mit einer unterbrochenen Linie ist eine lichtdurchlässige Abschlußplatte 36 der Lichtabgabeeinrichtung 20 angedeutet, die optional vorhanden sein kann.

In Fig. 2 ist eine Alternative veranschaulicht, bei der statt der Leiterplatte 24 von Fig. 1 eine vordere Leiterplatte 24 a und eine hintere Leiterplatte 24 b vorhanden sind. Die Leiterplatten 24 a und 24 b bilden eine sandwichartige Leiterplattenanordnung 38. Die vordere Leiterplatte 24 a trägt die LEDs 30 und Bauelemente 32 a die von der Schaltung her den LEDs 30 am sinnvollsten nahe benachbart positioniert werden (insbesondere Zener-Dioden und Kondensatoren, siehe Beschreibung einer Schaltung weiter unten). Die hintere Leiterplatte 24 b trägt die restlichen Bauelemente 32 b. Durch Steckverbinder 40 sind die Leiterplatten 24a und 24b elektrisch miteinander verbunden.

Fig. 3 veranschaulicht einen längenverstellbaren Bereich 42 eines Tragkörpers einer Lichtabgabeeinrichtung 20. Nach Art einer Teleskopverbindung ragt ein zylindrischer, hinterer Bereich 44 des Tragkörpers in einen etwas durchmessergrößeren, vorderen Bereich 46 des Tragkörpers hinein. An dem hinteren Bereich 44 ist ein radial nach außen ragender Stift 48 befestigt. Der Stift 48 wirkt mit einer Nut oder einem Schlitz 50 zusammen, der in dem vorderen, zylindrischen Bereich 46 in einem spiralförmigen Verlauf analog einem Gewindegang vorgesehen ist. Wenn man die Bereiche 44 und 46 gegeneinander verdreht, ändert sich die effektive Länge des Tragkörpers, gemessen in Richtung der Achse 2. Die Passung zwischen dem vorderen Bereich 46 und dem hinteren Bereich 44 ist so eng, dass sich eine einmal eingestellt Längeneinstellung nicht wieder von selbst verändert. Ggf. kann ein reibungserhöhender Zwischenring zwischen dem Bereich 46 und 44 vorgesehen sein. Der längenverstellbare Bereich 42 befindet sich in demjenigen Teil des Tragkörpers, der in Fig. 1 mit 52 bezeichnet ist.

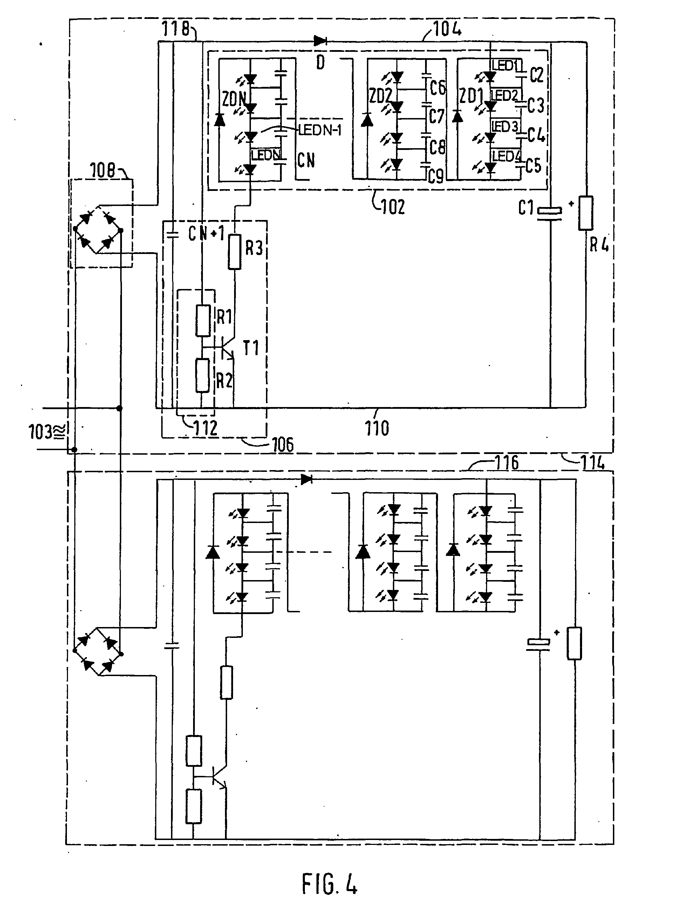

Fig. 4 zeigt schematisch eine Schaltungsanordnung gemäß einer Ausführungsform der Erfindung.

Block 114 zeigt eine Schaltungseinheit einer Ausführungsform der erfindungsgemäßen Lichtabgabeeinrichtung, bestehend aus Netzeingang 103, Gleichrichter 108, strombegrenzender Schaltung 106, Diode D, LED-Strang 102, Kapazität C1, Kapazität CN+1 und Widerstand R4.

Durch die Gleichrichterschaltung 108 wird eine am Netzeingang eventuell anliegende Wechselspannung in eine Gleichspannung umgewandelt, die folglich zwischen den Punkten 118 und 110 anliegt. In der vorliegenden Ausführungsform wurde, ohne andere Ausführungsformen auszuschließen, ein Brückengleichrichter verwendet.

In Block 102 sind LEDs (LED 1 bis LED N) in Serie geschaltet, wobei Zener-Dioden (ZD 1 bis ZD N) antiparallel geschaltet und Kondensatoren (C 2 bis C N) parallel sind. In der vorliegenden Ausführungsform wurde, ohne andere Ausführungsformen auszuschließen, jeder LED (LED 1 bis LED N) ein Kondensator (C2 bis C N) parallel geschaltet und jeweils vier LEDs (LED 1 bis LED N) eine Zener-Diode (ZD1 bis ZD N) antiparallel geschaltet. In dieser Ausführungsform beträgt die Durchlassspannung der LEDs (LED 1 bis LED N) jeweils ca. 3,5 Volt, es wurden 31 Dioden in Serie angeordnet. Die Durchbruchspannung der Zener-Diode (ZD 1 bis ZD N) liegt höher als die Summe der Durchlassspannungen der jeweils antiparallel überbrückten Leuchtdioden (LED 1 bis LED N). Dadurch ist der Stromfluß über die Zener-Diode (ZD1 bis ZD N) gewährleistet, falls in den antiparallel überbrückten Leuchtdioden (LED 1 bis LED N), deren Zuleitungen oder deren Lötstellen ein Defekt entsteht.

Die LEDs haben typischerweise, je nach Wellenlänge, eine Durchlassspannung von 2 bis 4 V und werden z. B. mit einem Nennstrom von 50 mA ausgewählt. Die maximal zulässige Verlustleistung der Zenerdioden muß mindestens so hoch sein wie das Produkt aus Zenerspannung und Nennstrom durch die LEDs.

Die Diode D befindet sich in Durchlaßrichtung zwischen der Gleichrichterschaltung 108, d. h. dem Potential 108, und dem LED-Strang 102, d. h. dem Potential 104.

In Block 106 ist die strombegrenzende Schaltung einer Ausführungsform der Lichtabgabeeinrichtung dargestellt. Sie ist durch einen npn-Transistor und die Widerständen R1, R2 und R3 realisiert. Die Widerstände R1 und R2 sind in Serie zwischen die Potentiale 118 und 110 geschaltet. Der Transistor T1 ist mit seiner Basis an das Potential zwischen den Widerständen R1 und R2 angeschlossen.

Der Emitter des Transistors T1 ist an das Potential 110 angeschlossen. Der Kollektor des Transistors T1 ist über den Widerstand R3 und den damit in Serie geschalteten LED-Strang 102 aus den LEDs LED1 bis LEDN an das Potential 104 angeschlossen. Über die Widerstände R1 und R2 wird die Basisspannung eingestellt, wodurch aufgrund der Kennlinie des Transistors der Kollektorstrom festgelegt wird. In der vorliegenden Ausführungsform sind der Widerstand R 1 mit ca. 100 kOhm, der Widerstand R 2 mit ca. 10 kOhm und der Widerstand R3 mit ca. 100 Ohm bemessen. Als Transistor wird der Typ MPSA 42 verwendet. Die strombegrenzende Schaltung kann beispielsweise auch aus einem MOS-FET Transistor aufgebaut werden. In beiden beschriebenen Fällen wird die Strombegrenzung durch den Widerstand R3 erreicht. Der Transistor erfüllt die Funktion des elektronischen Schalters.

Die beschriebene Schaltung kann äquivalent mittels eines pnp-Bipolar-Transistors aufgebaut werden. Dabei wird dessen Emitter an das Potential (104) der Anode der Diode (D) angeschlossen, dessen Kollektor über den LED-Strang (102) an das dazu entgegengesetzte Netzspannungs-Potential angeschlossen und dessen Basis an das Potential der Netzspannung angeschlossen.

Die Kapazität C1 ist parallel zu dem LED-Strang 102 zwischen die Potentiale 104 und 110 geschaltet. Der Kondensator C1 dient dazu, die Halbwellen der gleichgerichteten Wechselspannung zu glätten, so dass die LEDs mit einer quasi kontinuierlichen Gleichspannung versorgt werden.

Die Kapazität CN+1 ist parallel zu dem LED-Strang 102 zwischen die Potentiale 118 und 110 geschaltet. Ist die Schaltung an die Netzspannung angeschlossen, stellt die Kapazität C N+1 sicher, dass der Spannungsteiler 12 an der Basis des Transistors T1 zwischen den Spitzen der Halbwellen näherungsweise mit der Spitzenspannung versorgt wird. Dadurch ist sichergestellt, dass der Transistor T1 zwischen den Spitzen der Halbwellen durchschaltet und die LEDs leuchten können, da sie auch vom Kondensator C1 mit Strom versorgt werden.

Zum Verhindern eines Nachleuchtens nach Ausschalten der Netzspannung 103, ist in dieser Ausführungsform für den Kondensator C1 ein parallel geschalteter Entladewiderstand R 4 vorgesehen und die Diode D trennt den Spannungsteiler der Basis des Transistors T1 vom Potential 104 des Kondensators C 1, worauf der Transistor den Stromfluss durch die Dioden sperrt.

Vor dem Gleichrichter am Netzeingang kann sich eine optionale Spannungsteilerschaltung befinden, die ermöglicht, dass die Lichtabgabeeinheit auf einfache Art und Weise für unterschiedliche Netzspannungen umkonfiguriert werden kann.

Die in Block 116 dargestellte Schaltung entspricht exakt der beschriebenen Schaltung in Block 114 und ist ab Netzeingang redundant zur oben beschriebenen Schaltung aufgebaut.

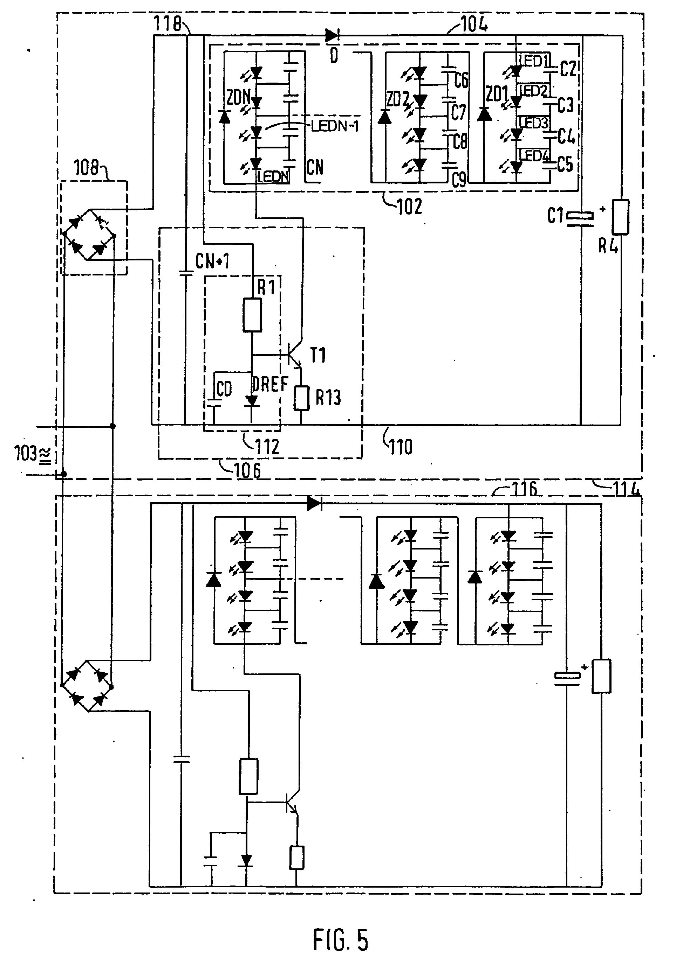

Die in Fig. 5 gezeichnete Schaltung unterscheidet ich von der in Fig. 4 gezeichneten Schaltung nur in folgender Hinsicht:

Statt des Widerstands R2 ist eine Diode Dref vorhanden. Der Widerstand R3 fehlt. Es sind neu ein Widerstand R13 und eine Kapazität CD vorhanden. Die Kapazität CD ist parallel zu der Diode Dref geschaltet.

Die Ausführungsform gemäß Fig. 5 besitzt eine Stromeinprägeeinrichtung. Die Ansteuerung wird durch den Widerstand R1 und die in Flußrichtung gepolten Diode Dref realisiert. In Serie zu dem LED-Strang befindet sich die Kollektor-Emitter-Strecke des npn-Bipolar-Transistors T1 und der Widerstand R13. Die Basisspannung des Transistors T1 wird von der Diode Dref abgegriffen. Die Summe des Spannungsabfalls über R13 und des Spannungsabfalls über die Basis-Emitter-Strecke von T1 entspricht der Spannung über der Diode Dref. Da der Spannungsabfall über der Diode Dref von der Netzspannung weitestgehend unabhängig ist, ist somit der Strom durch Widerstand R13 von dieser unabhängig, wodurch auch der Strom durch die LEDs weitestgehend von der Netzspannung unabhängig ist. Der Widerstand R13 soll so bemessen sein, dass der Quotient aus der Spannung über Diode Dref minus Spannung über die Basis-Emitter-Strecke durch den Wert des Widerstandes R13 im wesentlichen den Nennstrom der LEDs ergibt. Ein npn-Bipolar-Transistor T1 soll so ausgewählt sein, dass über die Kolfektor-Emitter-Strecke die Netzspannung anliegen darf, und dass der eingestellte Strom durch die LEDs über die Kollektor-Emitter-Strecke fließen darf. Die Diode Dref kann durch eine in Flußrichtung gepolte Diode oder LED bzw. durch eine im Sperrichtung gepolte Zener-Diode realisiert werden. Der Transistor T1 kann auch durch einen Feldeffekttransistor realisiert werden. Zur Erzeugung eines konstanten Stroms kann auch eine Konstantstromdiode verwendet werden. Die Diode Dref und Widerstand R1 können auch durch eine Referenzspannungsquelle ersetzt werden.

In der beschriebenen Schaltung hat der Transistor Funktion in der Stromeinprägeeinrichtung und der Nachleuchtunterdrückung.

Die beschriebene Schaltung kann äquivalent mittels eines pnp-Bipolar-Transistors aufgebaut werden.


**Patentansprüche**

**1.** Lichtabgabeeinrichtung, insbesondere Verkehrssignal-Lichtabgabeeinrichtung, die mit Leuchtdioden (= LEDs) (30) aufgebaut ist, aufweisend folgende Merkmale:

(a) die Lichtabgabeeinrichtung weist mindestens einen Strang (102) auf, in dem eine Vielzahl von LEDs (30) in Serie geschaltet ist;
(b) der LED-Strang (102) ist ohne Spannungkonversion und ohne Pulsmodulation im Wesentlichen an eine Netzspannung (103) von mindestens 110 V anschließbar;
(c) der LED-Strang ist über eine Strombegrenzungseinrichtung (106) an die Netzspannung anschließbar; und
(d) eine Einrichtung zum Unterdrücken des Nachleuchtens (R4, D, T1) der LEDs (30) ist vorgesehen.

**2.** Lichtabgabeeinrichtung nach Anspruch 1,
**dadurch gekennzeichnet, dass** bei dem LED-Strang (102) mehrere Zener-Dioden (ZD) vorgesehen sind, die jeweils mit mindestens einer LED (30) parallel geschaltet und gegensinnig gepolt sind.

**3.** Lichtabgabeeinrichtung nach Anspruch 1 oder 2,
**dadurch gekennzeichnet, dass** der LED-Strang und die Strombegrenzungseinrichtungen (106) über eine gleichrichtende Schaltung (108) an die Netzspannung (103) anschließbar ist.

**4.** Lichtabgabeeinrichtung nach einem der Ansprüche 1 bis 3,
**dadurch gekennzeichnet, dass** die Anordnung der LEDs (30) und die Stromversorgung der LEDs (30) ab dem Netzeingang redundant sind.

**5.** Lichtabgabeeinrichtung nach einem der Ansprüche 1 bis 4,
**gekennzeichnet durch**

(a) einen Tragkörper (34), der einen Anbringungsbereich zum Haltern der Lichtabgabeeinrichtung (20) in einem Sockel unter Stromzuführung und einen Lichtabgabebereich mit LEDs (30) aufweist;
(b) und eine Leiterplatte (24) oder eine sandwichartige Leiterplattenanordnung (24a, 24b), wobei die LEDs (30) und die Bauelemente (32) einer Schaltung, die ohne Spannungskonversion den Anschluß der Lichtabgabeeinrichtung (20) an eine Netzspannung von mindestens 110 V erlaubt, an der Leiterplatte (24) oder der sandwichartigen Leirterplattenanordnung (24a, 24b) angebracht sind.

**6.** Lichtabgabeeinrichtung nach Anspruch 5,
**dadurch gekennzeichnet, dass** die LEDs (30) in ihrem Abstand von dem Anbringungsbereich des Tragkörpers (34) so positioniert sind, dass ihre Lichtabgabe weitgehend dem von einem Reflektor (4) reflektierten Licht einer gängigen Verkehrsampel äquivalent ist.

**7.** Lichtabgabeeinrichtung nach Anspruch 5 oder 6,
**dadurch gekennzeichnet, dass** der Tragkörper (34), mit Ausnahme von Teilen des Anbringungsbereichs, aus Kunststoff besteht.

**8.** Lichtabgabeeinrichtung nach einem der Ansprüche 5 bis 7,
**dadurch gekennzeichnet, dass** der Tragkörper (34) eine Konfiguration mit im Wesentlichen kreisförmigem Querschnitt hat.

**9.** Lichtabgabeeinrichtung nach einem der Ansprüche 5 bis 8,
**dadurch gekennzeichnet, dass** die Leiterplatte oder die Leiterplattenanordnung (24a, 24b) in Draufsicht einen Durchmesser haben, der im Wesentlichen dem vorderen Enddurchmesser des Reflektors (4) einer gängigen Verkehrsampel entspricht.

**10.** Lichtabgabeeinrichtung nach einem der Ansprüche 5 bis 9,
**dadurch gekennzeichnet, dass** der Anbringungsbereich in eine, jeweils für eine Glühlampe, gängige Schraubfassung oder in eine gängige Steckfassung oder in eine gängige Bajonettfassung paßt.

**11.** Lichtabgabeeinrichtung nach einem der Ansprüche 5 bis 10,
**dadurch gekennzeichnet, dass** der Tragkörper vor den LEDs (30) mit einer lichtdurchlässigen Abschlußplatte (36) versehen ist.

**12.** Lichtabgabeeinrichtung nach einem der Ansprüche 5 bis 11,
**dadurch gekennzeichnet, dass** der Tragkörper (34) einen Anlagering (22) aufweist zur Anlage gegen einen Widerlagerbereich einer Vorrichtung, in welche die Lichtabgabeeinrichtung (20) eingesetzt werden soll.

**13.** Lichtabgabeeinrichtung nach einem der Ansprüche 5 bis 12,
**dadurch gekennzeichnet, dass** der Tragkörper (34) einen längenverstellbaren Bereich (42) aufweist, durch dessen Verstellung sich die Positionierung der LEDs (30) relativ zu dem Anbringungsbereich des Tragkörpers (34) einstellen läßt.

**14.** Lichtabgabeeinrichtung nach einem der Ansprüche 1 bis 13, **dadurch gekennzeichnet, dass** die Strombegrenzungseinrichtung (106) einen Widerstand (R3) aufweist.

**15.** Lichtabgabeeinrichtung nach einem der Ansprüche 1 bis 14, **dadurch gekennzeichnet, dass** die Strombegrenzungseinrichtung (106) eine Stromeinprägeeinrichtung aufweist.

**16.** Lichtabgabeeinrichtung nach Anspruch 15, **dadurch gekennzeichnet, dass** die Stromprägeeinrichtung (106) einen Widerstand (R1) und eine Diode (Dref) enthält, die in Serie an die Netzspannung (103) angeschlossen sind, wobei der Widerstand (R1) am gleichen Potential (118) der Netzspannung (103) wie der LED-Strang (102) angeschlossen ist, wogegen die Diode (Dref) an dem dazu entgegengesetzten Potential (110) der Netzspannung (103) angeschlossen ist, und einen Transistor (T1) enthält, an dessen Basis das Potential zwischen dem Widerstand (R1) und der Diode (Dref) anliegt, dessen Kollektor über den LED-Strang (102) an das genannte gleichen Potential (118) der Netzspannung (103) angeschlossen ist, und dessen Emitter über einen weiteren Widerstand (R13) an das dazu entgegengesetzte Potential (110) der Netzspannung (103) angeschlossen ist.

**17.** Lichtabgabeeinrichtung nach einem der Ansprüche 1 bis 16, **dadurch gekennzeichnet, dass** mindestens eine Kapazität (C1) in Parallelschaltung zu dem LED-Strang (102) mit Strombegrenzungseinrichtung (106) angeordnet ist.

**18.** Lichtabgabeeinrichtung nach Anspruch 17, **dadurch gekennzeichnet, dass** zwischen der gleichrichtenden Schaltung (108) und der Kapazität (C1) eine in Flußrichtung gepolte Diode (D) vorgesehen ist, und dass in Serie zu dem an die Anode der Diode (D) angeschlossenen LED-Strang (102) ein elektronischer Schalter (T1) mit mindestens einem Steuereingang vorgesehen ist, wobei der mindestens eine Steuereingang des elektronischen Schalters (T1) an die Netzspannung (103) angeschlossen ist.

**19.** Lichtabgabeeinrichtung nach Anspruch 18, **dadurch gekennzeichnet, dass** als elektronischer Schalter ein Transistor (T1) vorgesehen ist, dessen Kollektor über den LED-Strang (102) an das Potential (104) der Anode der Diode (D) angeschlossen ist, dessen Emitter an das dazu entgegengesetzte Netzspannungspotential (110) angeschlossen ist, und dessen Basis an das Potential (118) der Netzspannung angeschlossen ist.

20. Lichtabgabeeinrichtung nach einem der Ansprüche 1 bis 19, **dadurch gekennzeichnet, dass** mindestens ein Bauelement (T1) vorgesehen ist, das Funktion sowohl in der Strombegrenzungseinrichtung (106) als auch in der Einrichtung zum Unterdrücken des Nachleuchtens (R4, D, T1) der LEDs (30) hat.

21. Lichtabgabeeinrichtung nach einem der Ansprüche 17 bis 20, **dadurch gekennzeichnet, dass** zu der Kapazität (C1) mindestens ein Widerstand (R4) in Parallelschaltung angeordnet ist.

22. Lichtabgabeeinrichtung nach einem der Ansprüche 1 bis 21, **dadurch gekennzeichnet, dass** den LEDs (30) des LED-Strangs (102) mindestens eine Kapazität (C2 bis CN) parallel geschaltet ist, wobei jede Kapazität (C2 bis CN) mindestens einer LED (30) parallel geschaltet ist.

23. Lichtabgabeeinrichtung nach einem der Ansprüche 4 bis 22, **dadurch gekennzeichnet, dass** die LEDs (30) der redundanten LED-Stränge (102) so auf der Leiterplatte (24) oder der sandwichartigen Leiterplattenanordnung (24a, 24b) angeordnet sind, dass bei Ausfall eines redundanten Teils (114; 116) eine im Wesentlichen homogene Lichtabgabe erreicht wird.

24. Lichtabgabeeinrichtung nach einem der Ansprüche 4 bis 22, **dadurch gekennzeichnet, dass** die LEDs (30) der redundanten LED-Stränge (102) so auf der Leiterplatte (24) oder der sandwichartigen Leiterplattenanordnung (24a, 24b) angeordnet sind, dass bei Ausfall eines redundanten Teils (114; 116) eine derart nicht-homogene Lichtabgabe entsteht, dass der Ausfall für einen Betrachter erkennbar ist.

## Claims

1. A light emitting device, in particular a traffic signal light emitting device, composed with light emitting diodes (= LEDs) (30), comprising the following features:

   (a) the light emitting device comprises at least one strand (102) having a multiplicity of LEDs (30) connected in series;
   (b) the LED strand (102) is adapted to be connected substantially to a mains voltage (103) of at least 110 V without voltage conversion and without pulse modulation;
   (c) the LED strand is adapted to be connected to the mains voltage via a current limiting means (106); and
   (d) there is provided a means for suppressing afterglow (R4, D, T1) of the LEDs (30).

2. A light emitting device according to claim 1,
   **characterized in**
   **that** LED strand (102) has a plurality of Zener diodes (ZD) provided therein, each being connected in parallel to at least one LED (30) and being reverse biased.

3. A light emitting device according to claim 1 or 2,
   **characterized in that** the LED strand and the current limiting means (106) are adapted to be connected to the mains voltage (103) via a rectifying circuit (108).

4. A light emitting device according to any of claims 1 to 3,
   **characterized in that** the assembly of the LEDs (30) and the power supply of the LEDs (30) are redundant starting from the mains input.

5. A light emitting device according to any of claims 1 to 4,
   **characterized by**

   (a) a supporting body (34) having a mounting portion for supporting the light emitting device (30) in a socket supplying power to the same, and having a light emitting portion equipped with LEDs (30);
   (b) and a circuit board (24) or a sandwich-like circuit board assembly (24a, 24b), with the LEDs (30) and the components (32) of a circuit that permits connection of the light emitting device (20) to a mains voltage of at least 110 V without voltage conversion being mounted on said circuit board (24) or said sandwich-like circuit board assembly (24a, 24b).

6. A light emitting device according to claim 5,
   **characterized in that** the LEDs (30), in terms of the spacing thereof from the mounting portion of the supporting body (34), are positioned such that the light emission thereof is largely equivalent to the light reflected by a reflector (4) of a common traffic light.

7. A light emitting device according to claim 5 or 6,
   **characterized in that** the supporting body (34), except for parts of the mounting portion, consists of plastics material.

8. A light emitting device according to any of claims 5 to 7,
   **characterized in that** the supporting body (34) has a configuration of substantially circular cross-sectional area.

9. A light emitting device according to any of claims 5 to 8,
   **characterized in that** the circuit board or the circuit board assembly (24a, 24b), as seen in plan view, has a diameter which substantially corresponds to the front end diameter of the reflector (4) of a common traffic light.

10. A light emitting device according to any of claims 5 to 9,
    **characterized in that** the mounting portion fits into a common screw-type socket provided for a particular incandescent bulb, or into a common plug-in socket or a common bayonet-type socket.

11. A light emitting device according to any of claims 5 to 10,
    **characterized in that** the supporting body is provided with a translucent end plate (36) in front of the LEDs (30).

12. A light emitting device according to any of claims 5 to 11,
    **characterized in that** the supporting body (34) comprises an abutment ring (22) for abutment on an abutment portion of an apparatus in which the light emitting device (20) is to be inserted.

13. A light emitting device according to any of claims 5 to 12,
    **characterized in that** the supporting body (34) has a length-adjustable portion (42) by adjustment of which the positioning of the LEDs (30) with respect to the mounting portion of the supporting body (34) can be adjusted.

14. A light emitting device according to any of claims 1 to 13,
    **characterized in that** the current limiting means (106) comprises a resistor (R3).

15. A light emitting device according to any of claims 1 to 14,
    **characterized in that** the current limiting means (106) comprises a current impression means.

16. A light emitting device according to claim 15,
    **characterized in that** the current impression means (106) comprises a resistor (R1) and a diode (Dref) that are connected in series to the mains voltage (103), the resistor (R1) being connected to the same potential (118) of the mains voltage (103) as the LED strand (102), and the diode (Dref) being connected to the opposite potential (110) of the mains voltage (103), and comprises furthermore a transistor (T1), with the base thereof having the potential between the resistor (R1) and the diode (Dref) applied thereto, the collector thereof being connected via the LED strand (102) to the said same potential (118) of the mains voltage (103), and the emitter thereof being connected, via an additional resistor (R13), to the opposite potential (110) of the mains voltage (103).

17. A light emitting device according to any of claims 1 to 16,
    **characterized in that** there is at least one capacitor (C1) connected in parallel to the LED strand (102) including the current limiting means (106).

18. A light emitting device according to claim 17,
    **characterized in that** a forward biased diode (D) is located between the rectifying circuit (108) and the capacitor (C1), and **in that** an electronic switch (T1) having at least one control input is provided in series with the LED strand (102) connected to the anode of the diode (D), said at least one control input of the electronic switch (T1) being connected to the mains voltage (103).

**19.** A light emitting device according to claim 18,
**characterized in that** the electronic switch is constituted by a transistor (T1), the collector thereof being connected via the LED strand (102) to the potential (104) of the anode of the diode (D), the emitter thereof being connected to the mains voltage potential (110) opposite thereto, and the base thereof being connected to the potential (118) of the mains voltage.

**20.** A light emitting device according to any of claims 1 to 19,
**characterized in that** there is provided at least one component (T1) having a function both in the current limiting means (106) and in the means for suppressing afterglow (R4, D, T1) of the LEDs (30).

**21.** A light emitting device according to any of claims 17 to 20,
**characterized in that** the capacitor (C1) has at least one resistor (R4) connected in parallel thereto.

**22.** A light emitting device according to any of claims 1 to 21,
**characterized in that** the LEDs (30) of the LED strand (102) have at least one capacitor (C2 to CN) connected in parallel thereto, with each capacitor (C2 to CN) being connected in parallel to at least one LED (30).

**23.** A light emitting device according to any of claims 4 to 22,
**characterized in that** the LEDs (30) of the redundant LED strands (102) are mounted on the circuit board (24) or the sandwich-like circuit board assembly (24a, 24b) such that a substantially homogeneous emission of light is obtained in case of failure of a redundant part (104; 116).

**24.** A light emitting device according to any of claims 4 to 22,
**characterized in that** the LEDs (30) of the redundant LED strands (102) are arranged on the circuit board (24) or the sandwich-like circuit board assembly (24a, 24b) such that, in case of failure of a redundant part (114; 116), such non-homogeneous emission of light arises that the failure becomes recognizable to an observer.

**Revendications**

**1.** Dispositif d'émission lumineuse, en particulier dispositif d'émission lumineuse pour feux de signalisation, constitué de diodes électroluminescentes (LED) (30), comportant les caractéristiques suivantes :

(a) le dispositif d'émission lumineuse présente au moins une ligne (102), sur laquelle une pluralité de LED (30) est montée en série ;
(b) la ligne de LED (102) peut être reliée principalement à une tension de réseau (103) d'au moins 110 V sans conversion de tension et sans modulation d'impulsion;
(c) la ligne de LED peut être reliée à la tension de réseau par l'intermédiaire d'un dispositif de limitation de courant (106) ; et
(d) un dispositif pour supprimer la luminance résiduelle (R4, D, T1) des LED (30) est prévu.

**2.** Dispositif d'émission lumineuse selon la revendication 1, **caractérisé en ce que**, dans la ligne de LED (102), plusieurs diodes Zener (ZD) sont prévues, qui sont montées en parallèle avec au moins une LED (30) et sont polarisées en sens inverse.

**3.** Dispositif d'émission lumineuse selon la revendication 1 ou 2, **caractérisé en ce que** la ligne de LED et les dispositifs de limitation de courant (106) peuvent être reliés à la tension de réseau (103) par l'intermédiaire d'un circuit redresseur (108).

**4.** Dispositif d'émission lumineuse selon l'une des revendications 1 à 3, **caractérisé en ce que** l'agencement des LED (30) et l'alimentation en courant des LED (30) sont redondants à partir de l'entrée du réseau.

**5.** Dispositif d'émission lumineuse selon l'une des revendications 1 à 4, **caractérisé par**

(a) un support (34), qui présente une zone d'adaptation pour supporter le dispositif d'émission lumineuse (20) dans un socle lors de l'alimentation en courant et une zone d'émission lumineuse comportant les LED (30) ;
(b) et un circuit imprimé (24) ou un agencement de circuits imprimés en forme de sandwich (24a, 24b), où les LED (30) et les modules (32) d'un circuit, qui permet la connexion du dispositif d'émission lumineuse (20) à une tension de réseau d'au moins 110 V sans conversion de tension, sont disposés sur le circuit imprimé (24) ou sur l'agencement de circuits imprimés sous forme de sandwich (24a, 24b).

6. Dispositif d'émission lumineuse selon la revendication 5, **caractérisé en ce que** les LED (30) sont positionnées écartées de la zone d'adaptation du support (34) de sorte que leur émission lumineuse est sensiblement équivalente à celle d'une lumière d'une ampoule courante de feux de signalisation réfléchie par un réflecteur (4).

7. Dispositif d'émission lumineuse selon la revendication 5 ou 6, **caractérisé en ce que** le support (34) est réalisé en matière plastique à l'exception des parties de la zone d'adaptation.

8. Dispositif d'émission lumineuse selon l'une des revendications 5 à 7, **caractérisé en ce que** le support (34) présente une configuration avec une coupe transversale sensiblement circulaire.

9. Dispositif d'émission lumineuse selon l'une des revendications 5 à 8, **caractérisé en ce que** le circuit imprimé ou l'agencement de circuits imprimés (24a, 24b) présente en vue en plan un diamètre, qui correspond sensiblement au diamètre terminal antérieur du réflecteur (4) d'une ampoule courante de feux de signalisation.

10. Dispositif d'émission lumineuse selon l'une des revendications 5 à 9, **caractérisé en ce que** la zone d'adaptation est adaptée pour une douille à vis courante, respectivement pour une ampoule, ou pour une douille à prise de courant courante ou pour une douille à baïonnette courante.

11. Dispositif d'émission lumineuse selon l'une des revendications 5 à 10, **caractérisé en ce que** le support est muni d'une plaque d'obturation transparente (36) devant les LED (30).

12. Dispositif d'émission lumineuse selon l'une des revendications 5 à 11, **caractérisé en ce que** le support (34) présente une bague de contact (22) pour un contact contre une zone de butée d'un dispositif, dans lequel le dispositif d'émission lumineuse (20) doit être inséré.

13. Dispositif d'émission lumineuse selon l'une des revendications 5 à 12, **caractérisé en ce que** le support (34) présente une zone pouvant être réglée en longueur (42), grâce au déplacement de laquelle le positionnement des LED (30) peut être réglé par rapport à la zone d'adaptation du support (34).

14. Dispositif d'émission lumineuse selon l'une des revendications 1 à 13, **caractérisé en ce que** le dispositif de limitation de courant (106) présente une résistance (R3).

15. Dispositif d'émission lumineuse selon l'une des revendications 1 à 14, **caractérisé en ce que** le dispositif de limitation de courant (106) présente un dispositif d'application de courant.

16. Dispositif d'émission lumineuse selon la revendication 15, **caractérisé en ce que** le dispositif d'application de courant (106) comporte une résistance (R1) et une diode (Dref), qui sont reliées en série à la tension de réseau (103), dans lequel la résistance (R1) est reliée au même potentiel (118) de la tension de réseau (103) que la ligne de LED (102), en échange de quoi la diode (Dref) 20 est reliée au potentiel inverse (110) de la tension de réseau (103), et comporte un transistor (T1), sur la base duquel le potentiel se trouve entre la résistance (R1) et la diode (Dref), dont le collecteur est relié par l'intermédiaire de la ligne de LED (102) au même potentiel précité (118) de la tension de réseau (103), et dont l'émetteur est relié par l'intermédiaire d'une autre résistance (R13) au potentiel inverse (110) de la tension de réseau (103).

17. Dispositif d'émission lumineuse selon l'une des revendications 1 à 16, **caractérisé en ce qu'**au moins un condensateur (C1) est disposé en parallèle à la ligne de LED (102) avec le dispositif de limitation de courant (106).

18. Dispositif d'émission lumineuse selon la revendication 17, **caractérisé en ce qu'**une diode (D) polarisée dans le sens direct est prévue entre le circuit redresseur (108) et le condensateur (C1), et **en ce que**, en série par rapport à la ligne de LED (102) reliée à l'anode de la diode (D), un commutateur (T1) est prévu avec au moins une entrée de commande, où la au moins une entrée de commande du commutateur électronique (T1) est reliée à la tension de réseau (103).

19. Dispositif d'émission lumineuse selon la revendication 18, **caractérisé en ce qu'**un transistor (T1) est prévu en tant que commutateur électronique, dont le collecteur est relié par l'intermédiaire de la ligne de LED (102) au potentiel (104) de l'anode de la diode (D), dont l'émetteur est relié au potentiel inversé de la tension de réseau (110), et dont la base est reliée au potentiel (118) de la tension de réseau.

**20.** Dispositif d'émission lumineuse selon l'une des revendications 1 à 19, **caractérisé en ce qu'**au moins un module (T1) est prévu, qui a une fonction non seulement dans le dispositif de limitation de courant (106) mais également dans le dispositif pour supprimer la luminescence résiduelle (R4, D, T1) des LED (30).

**21.** Dispositif d'émission lumineuse selon l'une des revendications 17 à 20, **caractérisé en ce qu'**au moins une résistance (R4) est disposée en parallèle par rapport au condensateur (C1).

**22.** Dispositif d'émission lumineuse selon l'une des revendications 1 à 21, **caractérisé en ce qu'**au moins un condensateur (C2 à CN) est monté parallèle aux LED (30) de la ligne de LED (102), dans lequel chaque condensateur (C2 à CN) est monté parallèlement à au moins une LED (30).

**23.** Dispositif d'émission lumineuse selon l'une des revendications 4 à 22, **caractérisé en ce que** les LED (30) des lignes de LED redondantes (102) sont disposées sur le circuit imprimé (24) ou l'agencement de circuits imprimés sous forme de sandwich (24a, 24b), de sorte qu'une émission lumineuse sensiblement homogène est obtenue dans le cas d'une défaillance d'une partie redondante (114 ; 116).

**24.** Dispositif d'émission lumineuse selon l'une des revendications 4 à 22, **caractérisé en ce que** les LED (30) des lignes de LED redondantes (102) sont disposées sur le circuit imprimé (24) ou l'agencement de circuits imprimés sous forme de sandwich (24a, 24b), de sorte que, dans le cas d'une défaillance d'une partie redondante (114 ; 116), une émission lumineuse non homogène se produit de sorte que la défaillance peut être reconnue par un observateur.

FIG.1

FIG. 2

FIG.3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0101385 A